# FASCICULE DE BREVET EUROPEEN

(11) **EP 2 133 545 B1**
(45) Date de publication et mention de la délivrance du brevet: **04.05.2011**
(21) Numéro de dépôt: 09290411.9
(22) Date de dépôt: 04.06.2009
(51) Int. Cl.: F02K 7/06

(54) **Moteur à détonations pulsées**
Motor mit pulsierender Detonation
Pulsed detonation engine

(30) Priorité: 10.06.2008 FR 0803210
(43) Date de publication de la demande: 16.12.2009
(73) Titulaire: MBDA France, 75016 Paris (FR)
(72) Inventeur: Daniau, Emeric, 18400 St Florent sur Cher (FR); Falempin, François, 78730 Saint-Arnoult (FR); Bobo, Etienne, 18000 Bourges (FR); Minard, Jean-Pierre, 18340 Soye en Septaine (FR)
(74) Mandataire: Hauer, Bernard

(56) Documents cités:
- EP-A- 1 482 162
- DE-A1- 19 640 191

## Description

La présente invention concerne un moteur à détonations pulsées fonctionnant avec un mélange détonant combustible-air.

Ce type de moteur trouve des applications notamment, quoique non exclusivement, dans les domaines aéronautiques spatial et militaire pour équiper des aéronefs, fusées, missiles, etc ...

Le déroulement des différentes phases du cycle de fonctionnement du moteur est un point potentiellement critique et, en particulier, la maîtrise des phases d'alimentation et de détonation qui peuvent influer très fortement sur les performances d'un tel moteur.

On connaît déjà, par le brevet EP 1 482 162, un moteur à détonations pulsées dont la structure est définie par un tube de flamme fermé à une extrémité par un fond transversal mobile qui fait fonction de mur de poussée et sur lequel prennent appui les produits issus de la détonation du mélange détonant pour engendrer la poussée.

Dans ce moteur à détonations pulsées connu, ledit fond transversal mobile se déplace alternativement entre deux positions limites et des moyens élastiques de rappel, de type ressort, agissent sur ledit fond pour le propulser d'une desdites positions limites vers l'autre à la suite d'une compression du ressort. Un tel fond mobile impose alors le fonctionnement des deux phases d'alimentation et de détonation du moteur, par sa mobilité, en fermant et ouvrant au moins une lumière d'admission.

Cependant, au cours d'un cycle de fonctionnement du moteur composé d'un aller (correspondant à la compression du ressort) et d'un retour du fond mobile (correspondant à la propulsion de ce dernier), le ressort doit faire face à deux contraintes antagonistes :
- lors d'un aller, il doit être souple (c'est-à-dire de faible raideur) pour ne pas limiter le mouvement du fond mobile et ne pas pénaliser sa vitesse (et donc la fréquence de fonctionnement du moteur) tout en assurant un léger freinage en fin de course de celui-ci ; et
- lors du retour, il doit appliquer une force maximale sur celui-ci pour obtenir une bonne mise en vitesse afin de limiter le temps du cycle de fonctionnement.

La présente invention a pour objet de perfectionner le moteur à détonations pulsées précité en remédiant à cet inconvénient.

A cette fin, selon l'invention, le moteur à détonations pulsées fonctionnant avec un mélange détonant combustible-air et comportant :
- au moins un tube de flamme à fond transversal mobile par rapport à celui-ci, pour pouvoir occuper une première et une seconde position limite, et fermé par un appui transversal en regard dudit fond mobile ;
- des moyens élastiques de rappel agissant sur ledit fond mobile et aptes, d'une part, à propulser ce dernier de la première position vers la seconde et, d'autre part, à freiner ce dernier en fin de déplacement de la seconde position vers la première ;
- au moins un réservoir de combustible ; et
- des moyens d'alimentation en combustible de la chambre de combustion dudit tube de flamme ;
   est remarquable :
- en ce que lesdits moyens d'alimentation en combustible comprennent :
   ■ une chambre de transfert, à volume variable, délimitée par la paroi latérale dudit tube de flamme, par ledit fond mobile et par ledit appui transversal et destinée à recevoir du combustible provenant dudit réservoir ;
   ■ des moyens de transfert de combustible aptes à transférer du combustible dudit réservoir vers ladite chambre de transfert ; et
   ■ des moyens d'injection de combustible dans ladite chambre de combustion depuis ladite chambre de transfert ;
- et en ce que lesdits moyens élastiques de rappel sont constitués, au moins en partie, par le combustible contenu dans ladite chambre de transfert.

Ainsi, la compression du combustible contenu dans la chambre de transfert par le fond mobile permet aux moyens élastiques de rappel de freiner progressivement la course de celui-ci lors de son déplacement de la seconde position vers la première, ce qui a pour effet d'atténuer les variations de vitesse et les vibrations susceptibles d'être engendrées par un tel moteur facilitant ainsi son intégration dans des cellules aéronautiques.

En outre, du fait de la présence de combustible dans la chambre de transfert comprimé par le fond mobile, les moyens élastiques de rappel sont aptes à appliquer une force maximale sur le fond mobile pour obtenir une bonne mise en vitesse lors du déplacement de ce dernier de la première position vers la seconde. On limite ainsi le temps de cycle de fonctionnement du moteur.

Dans le cas où les moyens élastiques de rappel sont constitués uniquement par le combustible du réservoir stocké à l'état gazeux ou liquide, le nombre d'éléments mécaniques mis en oeuvre lors du fonctionnement du moteur est réduit, ce qui améliore la robustesse de la structure du moteur.

De préférence, lesdits moyens élastiques de rappel comportent en outre au moins un ressort auxiliaire de compression apte à aider à la propulsion dudit fond mobile de la première position vers la seconde et au freinage de ce dernier en fin de déplacement de la seconde position vers la première.

Ainsi, l'action du ressort auxiliaire peut se révéler utile lorsque la pression dans la chambre de transfert n'est pas suffisamment élevée pour assurer la propulsion et le freinage dudit fond mobile.

Selon une autre caractéristique de l'invention, ledit réservoir étant placé à l'arrière dudit appui transversal coaxialement audit tube de flamme, ledit appui transversal comporte avantageusement lesdits moyens de transfert de combustible permettant ainsi une communication directe du réservoir et de la chambre de transfert.

En outre, lesdits moyens de transfert de combustible sont constitués soit par au moins un détendeur comportant des ajutages, soit par au moins un carburateur à effet venturi.

Ainsi, par exemple, dans le cas où le combustible est stocké à l'état liquide dans le réservoir, les carburateurs peuvent permettre la vaporisation de celui-ci dans la chambre de transfert.

De façon avantageuse, au moins une lumière d'admission du mélange détonant étant ménagée dans la paroi latérale dudit tube de flamme :
- ledit fond mobile coulisse entre la première position et la seconde position, ce qui correspond à une phase d'alimentation en air, puis en combustible, de la chambre de combustion dudit tube de flamme, puis de la seconde position à la première position, ce qui correspond à la phase de détonation du mélange détonant dans ladite chambre de combustion;
- ledit fond mobile présente la forme d'un piston à paroi transversale tournée vers ladite chambre de combustion et à jupe latérale coopérant avec la paroi latérale dudit tube de flamme ; et
- une couronne est solidaire de la paroi transversale dudit piston et coopère avec la paroi latérale dudit tube de flamme pour obturer ladite lumière d'admission dans la seconde position dudit fond mobile.

Selon un exemple de réalisation conforme à l'invention, les moyens d'injection sont tels que :
- ils sont constitués par au moins un injecteur prévu sur la paroi latérale dudit tube de flamme et dont un premier orifice débouche au niveau de ladite lumière d'admission;
- au moins une lumière d'injection est ménagée dans la paroi latérale dudit tube de flamme, ladite lumière d'injection coopérant avec un second orifice dudit injecteur ;
- et la jupe latérale dudit piston comprend au moins une fenêtre d'injection, apte à coopérer avec ladite lumière d'injection, lors du déplacement dudit fond mobile de la première position vers la seconde, de manière à permettre l'injection de combustible dans ladite chambre de combustion depuis la chambre de transfert.

En variante, lesdits moyens d'injection sont constitués par au moins un clapet anti-retour avec ressort, logé dans la paroi transversale dudit piston, permettant l'injection de combustible dans ladite chambre de combustion lors du déplacement dudit fond mobile de la seconde position vers la première.

Par ailleurs, le moteur à détonations pulsées de l'invention comprend avantageusement des moyens de blocage temporaire dudit fond mobile lorsqu'il est dans la première position permettant de modifier le fréquence de fonctionnement dudit moteur.

Ainsi, en augmentant le temps de rétention du fond mobile en première position, on diminue la fréquence de fonctionnement du moteur (et par conséquent la poussée). Inversement, en limitant le temps de rétention du fond mobile en première position, on peut atteindre un fonctionnement à plein régime dont la fréquence dépend uniquement de la dynamique du piston.

Les figures du dessin annexé feront bien comprendre comment l'invention peut être réalisée. Sur ces figures, des références identiques désignent des éléments semblables.

La figure 1A est une vue schématique partielle en coupe longitudinale d'un mode de réalisation du moteur à détonations pulsées conforme à la présente invention, montrant le fond mobile dans la première position limite.

La figure 1B est semblable à la figure 1A, le fond mobile du moteur étant dans une position intermédiaire entre la première et la seconde position limite.

La figure 1C est analogue à la figure 1A, le fond mobile du moteur occupant la seconde position limite.

La figure 2 est une vue schématique partielle en coupe longitudinale d'une variante du mode de réalisation du moteur à détonations pulsées de l'invention représenté sur la figure 1A.

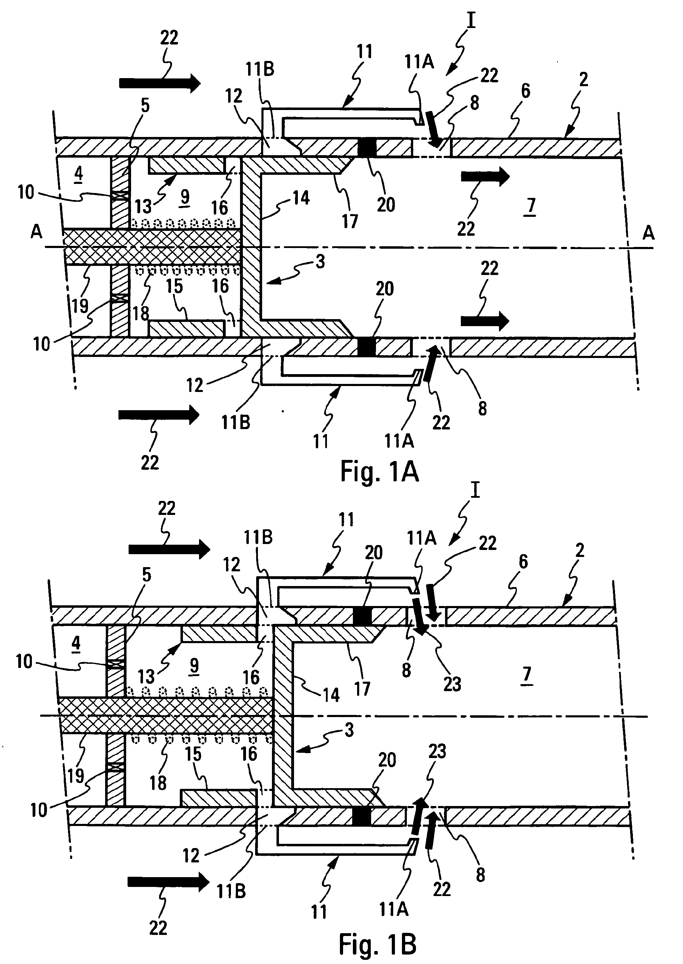

Le moteur à détonations pulsées I, représenté schématiquement et partiellement sur les figures 1A à 1C, comprend de façon connue un tube de flamme 2 cylindrique à axe longitudinal A, un fond transversal 3 logé avec ajustement à l'intérieur du tube de flamme 2 et un réservoir de combustible cylindrique 4 à axe longitudinal A (représenté partiellement) en amont du tube de flamme (à gauche sur les figures). Le tube de flamme 2 est séparé du réservoir de combustible 4 par un appui transversal 5.

Le fond transversal 3 délimite, avec la paroi latérale 6 du tube de flamme 2, une chambre de combustion 7, en partie illustrée, apte à recevoir cycliquement une charge de combustible. II définit un mur de poussée contre lequel s'appliquent les produits de détonation de la charge combustible pour engendrer la poussée.

En outre, le fond transversal 3 est monté mobile par rapport au tube de flamme 2 du moteur I et peut se déplacer, par exemple, en coulissant entre deux positions limites.

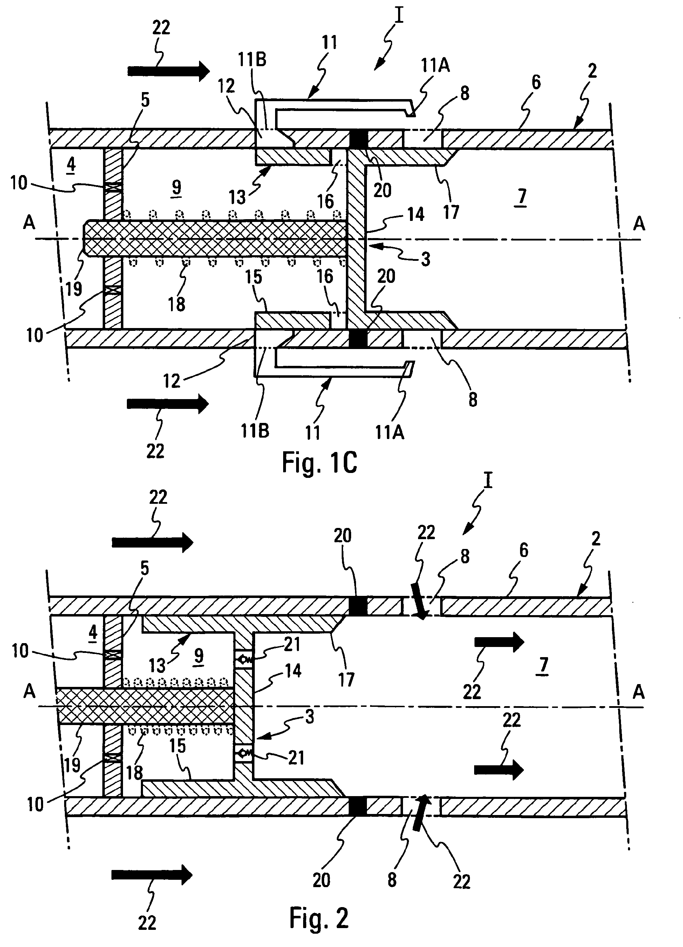

Selon l'invention, la première position limite (figures 1A) correspond à l'alimentation en air, provenant des entrées d'air (non représentées sur les figures), de la chambre de combustion 7 et la seconde position limite (figures 1C) correspond à la phase de détonation de la charge combustible.

Pour cela, comme le montrent les figures 1A à 1C, des lumières d'admission 8, pour l'admission d'air et de la charge combustible, sont ménagées dans la paroi latérale 6 du tube de flamme 2. Ces lumières d'admission 8 sont dégagées lorsque le fond mobile 3 occupe la première position et obturées quand il occupe la seconde position.

En outre, le tube de flamme 2 comprend une chambre de transfert 9 à volume variable, à l'arrière du fond mobile 3, délimitée par la paroi latérale 6 du tube de flamme 2 et par l'appui transversal 5. La chambre de transfert 9 est destinée à recevoir du combustible provenant dudit réservoir 4.

De plus, dans la réalisation illustrée, l'appui transversal 5 comporte des moyens de transfert 10 pour permettre, par exemple cycliquement, le transfert du combustible du réservoir 4 vers la chambre de transfert 9. Ces moyens de transfert peuvent être constitués de détendeurs à double effet comportant des ajutages, de venturis, etc ...

Le moteur à détonations pulsées I comprend en outre des injecteurs 11 prévus sur la paroi latérale 6 du tube de flamme 2. Ils permettent l'injection de combustible de la chambre de transfert 9 vers la chambre de combustion 7 par l'intermédiaire d'un premier orifice 11A débouchant au niveau des lumières d'admission 8.

Pour permettre l'injection de combustible de la chambre de transfert 9 vers la chambre de combustion 7, des lumières d'injection 12 sont pratiquées dans la paroi latérale 6 du tube de flamme 2 afin de coopérer avec un second orifice 11B des injecteurs 11.

Le fond mobile 3 se présente structurellement sous la forme d'un piston 13 composé d'une paroi transversale 14 tournée vers la chambre de combustion 7 à jupe latérale 15 coopérant, avec ajustement, avec la paroi latérale 6 du tube de flamme 2. Des fenêtres d'injection 16 sont ménagées dans la jupe latérale 15 du piston 13 pour permettre l'injection de combustible de la chambre de transfert 9 vers la chambre de combustion 7 par l'intermédiaire des injecteurs 11. Le fond mobile 3 comporte également une couronne 17 solidaire de la paroi transversale 14 du piston 13 et qui coopère, avec ajustement, avec la paroi latérale 6 du tube de flamme 2 pour obturer totalement, d'une part, les lumières d'admission 8 lorsque le fond mobile 3 occupe la seconde position et, d'autre part, les lumières d'injection 1 2 lorsque le fond mobile 3 occupe la première position.

Selon l'invention, des moyens élastiques de rappel sont prévus dans la chambre de transfert 9 entre le fond mobile 3 et l'appui transversal 5.

Avantageusement, ces moyens élastiques de rappel sont constitués de combustible contenu dans ladite chambre de transfert 9. La force de contre pression engendrée par la compression du combustible siégeant dans la chambre de transfert 9 permet, d'une part, de freiner légèrement le fond mobile 3 en fin de déplacement de la seconde position vers la première position et, d'autre part, de le propulser de sa première position vers sa seconde position

Comme le montrent les figures 1A à 1C, ils peuvent également être couplé avec un ressort auxiliaire de compression 18 (en pointillé sur les figures) disposé entre la face de la paroi transversale 14 du piston 13 et l'appui transversal 5 afin de faciliter la propulsion du fond mobile 3 lorsque la pression dans la chambre de transfert 9 n'est pas suffisante. Une tige de guidage 19 du ressort 18, fixée sur la paroi transversale 14 du piston 13, est associée audit ressort 18.

Selon le mode de réalisation, le moteur I comprend également des moyens de blocage temporaire 20 dudit fond mobile 3, lorsqu'il est dans la première position (figures 1A), de manière à modifier la fréquence de fonctionnement du moteur I. Ces moyens de blocage 20, par exemple logés dans la paroi latérale 6 du tube de flamme 2, peuvent être du type mécanique ou électo-mécanique.

Par ailleurs, selon une variante de la réalisation proposée illustrée en figure 2, l'injection de combustible de la chambre de transfert 9 vers la chambre de combustion 7 peut se faire au moyen de clapets anti-retour à ressort 21 logés dans la paroi transversale 14 du piston 13 lors du déplacement du fond mobile 3 de la seconde vers la première position.

Comme le montre la figure 2, la jupe latérale 15 du piston 13 ne comprend pas de fenêtre d'injection 16. Aucune lumière d'injection 12 n'est par ailleurs ménagée dans la paroi latérale 6 dudit tube de flamme 2.

Le reste de la structure du moteur I est semblable à celle décrite précédemment en relation avec les figures 1A à 1C.

Selon l'invention, le moteur à détonations pulsées I peut fonctionner selon les deux cycles de fonctionnement suivants :
- un cycle de fonctionnement en mode admission ouverte ; et
- un cycle de fonctionnement en mode admission fermée.

Comme le montrent les figures 1A à 1C, le cycle de fonctionnement en mode admission ouverte d'un tel moteur à détonations pulsées I est le suivant.

Tout d'abord, on suppose que le moteur I se trouve initialement dans la configuration, illustrée sur la figure 1A, pour laquelle le fond transversal mobile 3 occupe la première position, à savoir :
- les lumières d'injection 12 sont obturées par la couronne 17 du fond mobile 3 ;
- les fenêtres d'injection 16 sont obturées par la paroi latérale 6 du tube de flamme 2 ;
- du combustible gazeux sous pression est présent dans la chambre de transfert 9. La pression dans la chambre de transfert 9 est supérieure à la pression atmosphérique (Pt>Patm) ;
- les lumières d'admission 8 sont totalement dégagées permettant ainsi le balayage de la chambre de combustion 7 par le flux d'air (symbolisé par la flèche 22) en provenance des entrées d'air. La pression au sein de la chambre de combustion 7 est égale à la pression atmosphérique (Pc = Patm) ; et
- le ressort de rappel 18 est comprimé par le fond transversal mobile 3.

Sous l'action de la force de rappel du ressort 18 et de la pression dans la chambre de transfert 9, le fond transversal mobile 3 est déplacé vers l'avant. Simultanément, les fenêtres d'injection 16 et les lumières d'injection 12 s'ouvrent et coopèrent mutuellement. La différence de pression entre la chambre de transfert 9 et la chambre de combustion 7 provoque l'injection de combustible (symbolisée par la flèche 23) dans la chambre de combustion 7 par les injecteurs 11, les lumières d'admission 8 étant dégagées.

La poursuite du déplacement vers l'avant du fond mobile 3 provoque l'obturation des lumières d'admission 8 par l'intermédiaire de la couronne 17, l'injection de combustible dans la chambre de combustion 7 s'achevant légèrement avant que les lumières d'admission 8 ne soient totalement obturées.

La diminution de la pression dans la chambre de transfert 9 (Pt < Patm) peut permettre avantageusement un léger freinage du fond mobile 3 jusqu'à ce qu'il atteigne la seconde position pour laquelle :
- les lumières d'admission 8 et les lumières d'injection 12 sont totalement obturées respectivement par la couronne 17 du fond mobile 3 et par la jupe latérale 1 5 du piston 13 ;
- les fenêtres d'injection 16 sont entièrement obturées par la paroi latérale 6 du tube de flamme 2 ;
- un mélange détonant combustible-air est présent dans la chambre de combustion 7 ; et
- la pression dans la chambre de combustion 7 est supérieure à la pression atmosphérique (Pc > Patm).

Lorsque la détonation du mélange combustible-air se produit par l'intermédiaire d'un dispositif d'allumage (non représenté sur les figures), la pression augmente fortement dans la chambre de combustion 7, ce qui propulse le fond mobile 3 vers l'arrière (à gauche sur la figure 1C).

Lors de cette phase de recul du fond mobile 3, du combustible gazeux sous pression est transféré du réservoir 4 vers la chambre de transfert 9 par l'intermédiaire des moyens de transfert 10. La diminution du volume de la chambre de transfert 9, associée au transfert de combustible dans celle-ci, provoque l'augmentation de la pression dans la chambre de transfert 9 entraînant, avec l'action de la force de rappel du ressort 18, l'amortissement du fond mobile 3 jusqu'à ce qu'il atteigne de nouveau la première position (figure 1A).

Avantageusement, la pression de régulation du détendeur peut être adaptée, par variation de la pression pilote ou du tarage du ressort par déplacement d'une paroi, pour modifier la charge en combustible introduite à chaque cycle dans le volume de transfert 9, donc la pression d'injection et, par conséquent, la poussée.

Un nouveau cycle de fonctionnement du moteur I en mode admission ouverte peut alors débuter.

Par ailleurs, le cycle de fonctionnement en mode admission fermée d'un tel moteur à détonations pulsées I est le suivant.

Tout d'abord, on suppose que le moteur I se trouve initialement dans la configuration, illustrée sur la figure 1C, pour laquelle le fond mobile 3 occupe la seconde position limite précédemment décrite.

On suppose en outre que du combustible est présent dans la chambre de transfert 9 et que des moyens additionnels permettent d'alimenter la chambre de détonation en combustible.

Lorsque la détonation du mélange détonant se produit par l'intermédiaire du dispositif d'allumage, la pression augmente fortement dans la chambre de combustion 7, ce qui propulse le fond mobile 3 vers l'arrière (à gauche sur la figure 1C).

Lors de cette phase de recul du fond mobile 3, les lumières d'admission 8 et les lumières d'injection 12 s'ouvrent. Sous l'effet de la diminution de volume, la pression dans la chambre de transfert 9 augmente, ce qui provoque l'amortissement progressif du fond mobile 3. La différence de pression entre la chambre de transfert 9 et la chambre de combustion 7 entraîne en outre l'injection de combustible dans cette dernière par l'intermédiaire des injecteurs 11. L'injection s'arrête un peu avant que le fond mobile 3 atteigne la première position.

A la différence du mode admission ouverte décrit précédemment, lors de la phase de recul du fond mobile 3 du mode admission fermée, aucun transfert de combustible du réservoir 4 vers la chambre de transfert 9 n'est effectué, seule l'injection de combustible de la chambre de transfert 9 vers la chambre de combustion 7 est réalisée par l'intermédiaire des injecteurs 11 (du combustible étant initialement présent dans la chambre de transfert 9).

L'action de la force de rappel du ressort 18 comprimé permet de renvoyer le fond mobile 3 vers l'avant (à droite sur la figure 1A). Lors de ce retour, la dépression créée au sein de la chambre de transfert 9 par le fond mobile 3 provoque une aspiration de combustible contenu dans le réservoir 4 et une pulvérisation de celui-ci dans la chambre de transfert 9 par l'intermédiaire des moyens de transfert 10.

Alors qu'il approche de la seconde position (figure 1C), le fond mobile 3 est amorti puis stoppé, dans la seconde position, par la détonation du mélange détonant présent dans la chambre de combustion 7, ce qui débute ainsi un nouveau cycle de fonctionnement du moteur I.

Dans le mode d'admission fermée, le recul du fond mobile 3 vers la gauche fournit le travail d'injection du combustible de la chambre de transfert 9 vers la chambre de combustion 7.

## Revendications

1. Moteur à détonations pulsées fonctionnant avec un mélange détonant combustible-air et comportant :
- au moins un tube de flamme (2) à fond transversal mobile (3) par rapport à celui-ci, pour pouvoir occuper une première et une seconde position limite, et fermé par un appui transversal (5) en regard dudit fond mobile (3) ;
- des moyens élastiques de rappel agissant sur ledit fond mobile (3) et aptes, d'une part, à propulser ce dernier de la première position vers la seconde et, d'autre part, à freiner ce dernier en fin de déplacement de la seconde position vers la première ;
- au moins un réservoir de combustible (4) ; et
- des moyens d'alimentation en combustible de la chambre de combustion (7) dudit tube de flamme (2) ;
**caractérisé :**
- **en ce que** lesdits moyens d'alimentation en combustible comprennent :
• une chambre de transfert (9), à volume variable, délimitée par la paroi latérale (6) dudit tube de flamme (2), par ledit fond mobile (3) et par ledit appui transversal (5) et destinée à recevoir du combustible provenant dudit réservoir (4) ;
• des moyens de transfert de combustible (10) aptes à transférer du combustible dudit réservoir (4) vers ladite chambre de transfert (9) ; et
• des moyens d'injection (11, 21) de combustible dans ladite chambre de combustion (7) depuis ladite chambre de transfert (9) ;
- et **en ce que** lesdits moyens élastiques de rappel sont constitués, au moins en partie, par le combustible contenu dans ladite chambre de transfert (9).

2. Moteur selon la revendication 1,
**caractérisé en ce que** lesdits moyens élastiques de rappel comportent en outre au moins un ressort auxiliaire de compression (18) apte à aider à la propulsion dudit fond mobile (3) de la première position vers la seconde et au freinage de ce dernier en fin de déplacement de la seconde position vers la première.

3. Moteur selon l'une des revendications 1 ou 2,
**caractérisé en ce que**, ledit réservoir (4) étant placé à l'arrière dudit appui transversal (5) coaxialement audit tube de flamme (2), ledit appui transversal (5) comporte lesdits moyens de transfert de combustible (10).

4. Moteur selon l'une quelconque des revendications 1 à 3,
**caractérisé en ce que** lesdits moyens de transfert de combustible (10) sont constitués par au moins un détendeur comportant des ajutages.

5. Moteur selon l'une quelconque des revendications 1 à 3,
**caractérisé en ce que** lesdits moyens de transfert de combustible (10) sont constitués par au moins un carburateur à effet venturi.

6. Moteur selon l'une quelconque des revendications 1 à 5,
**caractérisé en ce que**, au moins une lumière d'admission (8) étant ménagée dans la paroi latérale (6) dudit tube de flamme (2) :
- ledit fond mobile (3), qui coulisse entre la première position et la seconde position, présente la forme d'un piston (13) à paroi transversale (14) tournée vers ladite chambre de combustion (7) et à jupe latérale (15) coopérant avec la paroi latérale (6) dudit tube de flamme (2) ; et
- une couronne (17) est solidaire de la paroi transversale (14) dudit piston (13) et coopère avec la paroi latérale (6) dudit tube de flamme (2) pour obturer ladite lumière d'admission (8) dans la seconde position dudit fond mobile (3).

7. Moteur selon la revendication 6,
**caractérisé :**
- **en ce que** lesdits moyens d'injection sont constitués par au moins un injecteur (11) prévu sur la paroi latérale (6) dudit tube de flamme (2) et dont un premier orifice (11A) débouche au niveau de ladite lumière d'admission (8);
- **en ce qu'**au moins une lumière d'injection (12) est ménagée dans la paroi latérale (6) dudit tube de flamme (2), ladite lumière d'injection (12) coopérant avec un second orifice (11B) dudit injecteur (11);
- et **en ce que** la jupe latérale (15) dudit piston (13) comprend au moins une fenêtre d'injection (16), apte à coopérer avec ladite lumière d'injection (12), lors du déplacement dudit fond mobile (3) de la première position vers la seconde, de manière à permettre l'injection de combustible dans ladite chambre de combustion (7) depuis la chambre de transfert (9).

8. Moteur selon la revendication 6,
**caractérisé en ce que** lesdits moyens d'injection sont constitués par au moins un clapet anti-retour avec ressort (21), logé dans la paroi transversale (14) dudit piston (13), permettant l'injection de combustible dans ladite chambre de combustion (7) lors du déplacement dudit fond mobile (3) de la seconde position vers la première.

9. Moteur selon l'une quelconque des revendications 1 à 8,
**caractérisé en ce qu'**il comprend des moyens de blocage temporaire (20) dudit fond mobile (3) lorsqu'il est dans la première position.

## Claims

1. A pulsed detonation engine operating with a fuel-air detonating mixture and comprising:
- at least one flame tube (2) with a mobile transversal bottom (3) with respect to the latter, so as to be able to occupy a first and a second limit position, and closed by a transversal support (5) with respect to said mobile bottom (3);
- elastic return means acting on said mobile bottom (3) and being able, on the one hand, to propel the latter from the first position to the second one and, on the other hand, to slow the latter down at the end of the travel from the second position to the first one;
- at least one fuel tank (4); and
- fuel supplying means for supplying fuel to the combustion chamber (7) of said flame tube (2);
**characterized:**
**in that** said fuel supplying means comprise:
• a transfer chamber (9) being variable in volume, bounded by the side wall (6) of said flame tube (2), by said mobile bottom (3) and by said transversal support (5) and adapted to receive fuel from said tank (4);
• fuel transferring means (10) being able to transfer fuel from said tank (4) to said transfer chamber (9); and
• fuel injecting means (11, 21) for injecting fuel into said combustion chamber (7) from said transfer chamber (9);
- and **in that** said elastic return means consist, at least in part, in the fuel contained in said transfer chamber (9).

2. An engine according to claim 1,
**characterized in that** said elastic return means further comprise at least one auxiliary compression spring (18) being able to help propelling said mobile bottom (3) from the first position to the second one and slowing down the latter at the end of the travel from the second position to the first one.

3. An engine according to any one of claims 1 or 2,
**characterized in that**, said tank (4) being arranged at the rear of said transversal support (5) coaxially to said flame tube (2), said transversal support (5) comprises said fuel transferring means (10).

4. An engine according to any one of claims 1 to 3,
**characterized in that** said fuel transferring means (10) consist in at least one pressure reducer comprising nozzles.

5. An engine according to any one of claims 1 to 3,
**characterized in that** said fuel transferring means (10) consist in at least one venturi effect carburetor.

6. An engine according to any one of claims 1 to 5,
**characterized in that**, at least one intake port (8) being arranged in the side wall (6) of said flame tube (2):
- said mobile bottom (3), sliding between the first position and the second position, has the shape of a piston (13) with a transversal wall (14) oriented to said combustion chamber (7) and a side skirt (15) cooperating with the side wall (6) of said flame tube (2); and
- a ring (17) is integral with the transversal wall (14) of said piston (13) and cooperates with the side wall (6) of said flame tube (2) so as to plug said intake port (8) in the second position of said mobile bottom (3).

7. An engine according to claim 6,
**characterized:**
- **in that** said injection means consist at least in one injector (11) provided on the side wall (6) of said flame tube (2) and a first hole (11 A) of which opens at the level of said intake port (8);
- **in that** at least one injection port (12) is arranged in the side wall (6) of said flame tube (2), said injection port (12) cooperating with a second hole (11B) of said injector (11);
- and **in that** the side skirt (15) of said piston (13) comprises at least one injection window (16), being able to cooperate with said injection port (12), upon the travel of said mobile bottom (3) from the first position to the second one, so as to enable fuel injection into said combustion chamber (7) from the transfer chamber (9).

8. An engine according to claim 6,
**characterized in that** said injection means consist in at least one check valve (21) with a spring, housed in the transversal wall (14) of said piston (13), enabling fuel injection into said combustion chamber (7) upon the travel of said mobile bottom (3) from the second position to the first one.

9. An engine according to any one of claims 1 to 8,
**characterized in that** it comprises temporary blocking means (20) for said mobile bottom (3) when it is in the first position.

## Patentansprüche

1. Pulsdetonationsmotor, der mit einem zündfähigen Kraftstoff/Luft-Gemisch funktioniert und Folgendes umfasst:
- mindestens ein Flammrohr (2) mit einem Querboden (3), der im Verhältnis dazu beweglich ist, um eine erste und eine zweite Grenzposition einnehmen zu können, und das durch eine Querabstützung (5) gegenüber dem beweglichen Boden (3) geschlossen ist;
- elastische Rückstellmittel, die auf den beweglichen Boden (3) einwirken und in der Lage sind, diesen einerseits von der ersten in die zweite Position zu treiben, und diesen andererseits am Ende der Verschiebung von der zweiten in die erste Position abzubremsen;
- mindestens einen Kraftstoffbehälter (4); und
- Mittel zur Kraftstoffversorgung der Brennkammer (7) des Flammrohrs (2);
**dadurch gekennzeichnet, dass**
- die Kraftstoffversorgungsmittel Folgendes umfassen:
■ eine Transferkammer (9) mit variablem Volumen, die durch die Seitenwand (6) des Flammrohrs (2) durch den beweglichen Boden (3) und durch die Querabstützung (5) begrenzt und dazu gedacht ist, Kraftstoff aus dem Behälter (4) aufzunehmen;
■ Kraftstoffübertragungsmittel (10), die dazu geeignet sind, Kraftstoff von dem Behälter (4) in die Transferkammer (9) zu übertragen, und
■ Mittel (11, 21) zum Einspritzen von Kraftstoff in die Brennkammer (7) von der Transferkammer (9) aus;
- und dass die elastischen Rückstellmittel mindestens teilweise aus dem Kraftstoff bestehen, der in der Transferkammer (9) enthalten ist.

2. Motor nach Anspruch 1, **dadurch gekennzeichnet, dass** die elastischen Rückstellmittel ferner mindestens eine Hilfsdruckfeder (18) umfassen, die dazu geeignet ist, zum Antrieb des beweglichen Bodens (3) von der ersten in die zweite Position und zum Abbremsen desselben am Ende der Verschiebung von der zweiten in die erste Position beizutragen.

3. Motor nach einem der Ansprüche 1 oder 2, **dadurch gekennzeichnet, dass**, da der Behälter (4) hinten an der Querabstützung (5) koaxial zum Flammrohr (2) angeordnet ist, die Querabstützung (5) die Kraftstoffübertragungsmittel (10) umfasst.

4. Motor nach einem der Ansprüche 1 bis 3, **dadurch gekennzeichnet, dass** die Kraftstoffübertragungsmittel (10) aus mindestens einem Druckminderer bestehen, der Stutzen umfasst.

5. Motor nach einem der Ansprüche 1 bis 3, **dadurch gekennzeichnet, dass** die Kraftstoffübertragungsmittel (10) aus mindestens einem Vergaser mit Venturi-Effekt bestehen.

6. Motor nach einem der Ansprüche 1 bis 5, **dadurch gekennzeichnet, dass**, da mindestens ein Einlassschlitz (8) in der Seitenwand (6) des Flammrohrs (2) eingerichtet ist:
- der bewegliche Boden (3), der sich zwischen der ersten Position und der zweiten Position verschiebt, die Form eines Kolbens (13) mit einer Querwand (14), die zu der Brennkammer (7) hingewandt ist, und mit einem Seitenmantel (15), der mit der Seitenwand (6) des Flammrohrs (2) zusammenwirkt, aufweist; und
- ein Kranz (17) mit der Querwand (14) des Kolbens (13) fest verbunden ist und mit der Seitenwand (6) des Flammrohrs (2) zusammenwirkt, um den Einlassschlitz (8) in der zweiten Position des beweglichen Bodens (3) zu verschließen.

7. Motor nach Anspruch 6, **dadurch gekennzeichnet, dass**:
- die Einspritzmittel aus mindestens einem Einspritzventil (11) bestehen, das auf der Seitenwand (6) des Flammrohrs (2) bereitgestellt wird und dessen erste Öffnung (11A) an dem Einlassschlitz (8) ausmündet;
- mindestens ein Einspritzschlitz (12) in der Seitenwand (6) des Flammrohrs (2) eingerichtet ist, wobei der Einspritzschlitz (12) mit einer zweiten Öffnung (11B) des Einspritzventils (11) zusammenwirkt;
- und der Seitenmantel (15) des Kolbens (13) mindestens ein Einspritzfenster (16) umfasst, das dazu geeignet ist, mit dem Einspritzschlitz (12) zusammenzuwirken, wenn der bewegliche Boden (3) von der ersten in die zweite Position bewegt wird, um das Einspritzen des Kraftstoffs in die Brennkammer (7) von der Transferkammer (9) aus zu ermöglichen.

8. Motor nach Anspruch 6, **dadurch gekennzeichnet, dass** die Einspritzmittel aus mindestens einem Rückschlagventil mit Feder (21) bestehen, das in der Querwand (14) des Kolbens (13) untergebracht ist und die Kraftstoffeinspritzung in die Brennkammer (7) ermöglicht, wenn der bewegliche Boden (3) von der zweiten in die erste Position bewegt wird.

9. Motor nach einem der Ansprüche 1 bis 8, **dadurch gekennzeichnet, dass** er Mittel (20) zum zeitweiligen Blockieren des beweglichen Bodens (3) umfasst, wenn er sich in der ersten Position befindet.
